# EUROPÄISCHE PATENTSCHRIFT

(11) **EP 0 494 641 B1**
(45) Veröffentlichungstag und Bekanntmachung des Hinweises auf die Patenterteilung: **06.09.1995**
(21) Anmeldenummer: 92100152.5
(22) Anmeldetag: 07.01.1992
(51) Int. Cl.: B29C 61/06, B29C 47/02, B29C 47/06

(54) **Verfahren zum Herstellen eines wärmeschrumpfbaren Kunststoffschlauches**
Process for making heat shrinkable plastic tube
Procédé pour la fabrication d'un tuyau en matière plastique thermorétractable

(30) Priorität: 10.01.1991 DE 4100564
(43) Veröffentlichungstag der Anmeldung: 15.07.1992
(73) Patentinhaber: RXS Schrumpftechnik-Garnituren GmbH, D-58093 Hagen (DE)
(72) Erfinder: Gräfe, Detlef, W-5800 Hagen 1 (DE); Sagemühl, Dieter, Dipl.-Ing., W-5804 Herdecke (DE)
(74) Vertreter: Fuchs, Franz-Josef, Dr.-Ing.

(56) Entgegenhaltungen:
- EP-A- 0 299 438
- EP-A- 0 324 630
- EP-A- 0 350 732
- EP-A- 0 416 352
- DE-A- 1 960 595
- DE-A- 3 824 757
- GB-A- 1 141 306
- US-A- 3 459 621

## Beschreibung

Die Erfindung betrifft ein Verfahren zum Herstellen eines wärmeschrumpfbaren Kunststoffschlauches mit wärmeschrumpfbaren Fäden.

Im allgemeinen werden wärmeschrumpfbare Schläuche oder Rohre aus thermoplastischem Material fortlaufend extrudiert, dann vernetzt und schließlich in einem weiteren Schritt kontinuierlich oder diskontinuierlich expandiert.

Weiterhin ist bekannt, wärmeschrumpfbare Schläuche aus einem Gewebe von Fäden herzustellen, wobei ein in Umlaufrichtung verlaufender Faden wärmeschrumpfende Eigenschaften aufweist, wie es in der US-PS 3.669.157 beschrieben ist. In Längsrichtung des Schlauches werden hingegen nichtschrumpfbare Fäden im Gewebeaufbau verwendet. Die Abdichtung dieses Gewebes erfolgt nachträglich mit Hilfe einer Tränkung von härtbaren Substanzen. Dies erfordert erheblichen Aufwand.

Aus der britischen Patentschrift GB-A- 1.141.306 ist ein schrumpfbarer Artikel bekannt, der aus einem Kunststoffrohr aus wärmeschrumpfbarem Material besteht, so daß die Schrumpfkräfte von diesem Flächenmaterial ausgehen. Zur Verstärkung ist ein Gelege oder Gewebe aus nicht schrumpfbaren Fäden aufgebracht, wobei das Gelege bzw. Gewebe so gestaltet ist, daß es die Schrumpfung zulaßt, ohne daß die Fäden selbst schrumpfen. Darüber ist eine Deckschicht angeordnet.

Es stellt sich somit die Aufgabe, ein Verfahren zu schaffen, mit dem in einfacher Weise ein dichter, wärmeschrumpfbarer Kunststoffschlauch hergestellt werden kann. Weiterhin ist Aufgabe der Erfindung, einen wärmeschrumpfbaren Kunststoffschlauch zu schaffen, der nach den Verfahrensansprüchen gefertigt werden kann.

Die erste gestellte Aufgabe wird gemäß der Erfindung mit einem Verfahren der eingangs erläuterten Art dadurch gelöst, daß ein Grundschlauchelement aus Kunststoffmaterial extrudiert wird, daß auf das Grundschlauchelement mindestens ein schrumpfbarer Faden wendelförmig fortlaufend aufgewickelt wird, daß anschließend in einem weiteren Extruder ein Deckschlauch aus Kunststoffmaterial auf das bewickelte Grundschlauchelement aufextrudiert wird und daß im Anschluß daran eine Vernetzung vorgenommen wird.

Die zweite Aufgabe wird gelöst mit einem wärmeschrumpfbaren Kunststoffschlauch gemäß des Anspruchs 21.

Vorteile der Erfindung sind in erster Linie darin zu sehen, daß nach diesem Verfahren wärmeschrumpfbare Kunststoffschläuche kontinuierlich in beliebiger Länge wie auch diskontinuierlich in entsprechend geforderten Abschnitten gefertigt werden können. Dabei ist besonders vorteilhaft, daß bei dem Verfahren selbst keine Dehnungs- bzw. Reckungsvorgänge vonnöten sind, da für das nötige Formgedächtnis des Kunststoffschlauches ein bereits vorher gerecktes Schrumpfelement, nämlich ein wärmeschrumpfbarer Kunststoffaden, verwendet wird. Ein Vorteil liegt auch darin, daß in unkomplizierter Weise auch der erforderliche Schrumpfungsgrad in weiten Grenzen ohne besondere Einrichtungen gewählt werden kann. Dies erfolgt zum Beispiel durch die entsprechende Wahl des schrumpfbaren Fadens, durch eine geeignete Wahl der Bewicklung oder durch entsprechende Auswahl des thermoplastischen Materials sowie durch geeignete Wahl des Vernetzungsgrades. Das Herstellungsverfahren selbst ist jedoch davon nicht betroffen. Weiterhin ist von Vorteil, daß bei diesem Verfahren aufwendige und schwer einstellbare Dehnungs- bzw. Reckvorrichtungen nicht mehr benötigt werden.

Die Erfindung wird nun anhand von fünf Figuren näher erläutert.
- Figur 1: zeigt eine Prinzipdarstellung zum Verfahren gemäß der Erfindung.
- Figur 2: erläutert ein erweitertes Herstellungsverfahren.
- Figur 3: zeigt den Querschnitt eines erfindungsgemäßen Kunststoffschlauches.
- Figur 4: zeigt das Prinzip eines schrumpfbaren Kunststoffschlauches mit mehreren schrumpfbaren Fäden.
- Figur 5: zeigt ein schrumpfbares Gewebe, das im Kunststoffschlauch eingebettet werden kann.
- Figur 6: zeigt die Herstellung mit in den Extruder einlaufenden Stützfäden.
- Figur 7: zeigt die Herstellung mit einem Gewebeschlauch.

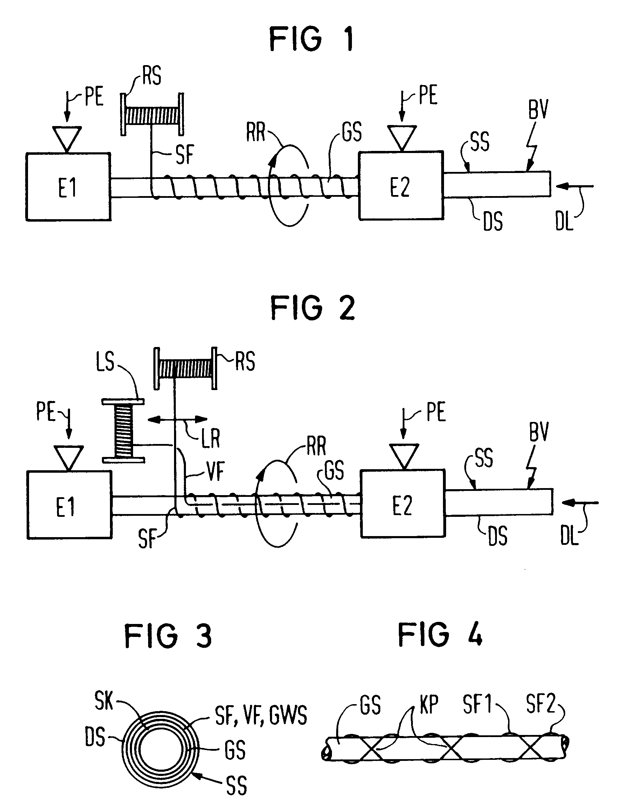

Figur 1 zeigt das Prinzip des Herstellungsverfahrens gemäß der Erfindung. In einem ersten Extruder E1 wird das eingebrachte Kunststoffmaterial, zum Beispiel Polyethylen, zu einem Grundschlauchelement GS in an sich bekannter Weise extrudiert. Auf dieses Grundschlauchelement GS wird ein schrumpfbarer Faden SF fortlaufend wendelförmig aufgewickelt. Daran anschließend wird dieses bewickelte Grundschlauchelement GS in einen zweiten Extruder E2 eingeführt. Als schrumpfbarer Faden SF wird ein gedehnter Kunststoffaden, vorzugsweise aus Polyethylen, verwendet, wobei dieser Kunststoffaden je nach Verwendungsart des fertigen Kunststoffschlauches entweder vernetzt oder auch unvernetzt sein kann. Der Dehnungsfaktor des schrumpfbaren Fadens SF kann bis zu 20 betragen, wobei sich dann für den fertigen Kunststoffschlauch ein radialer Schrumpffaktor von 5 bis 10 erzielen läßt. Das Aufbringen des schrumpfbaren Fadens SF erfolgt in dem gezeigten Beispiel durch Rotation RR der Vorratsspule RS für den schrumpfbaren Faden SF, wobei die Steigung der wendelförmigen Bewicklung durch den Vorschub des Grundschlauchelementes GS bestimmt ist und in Grenzen je nach Bedarf variiert werden kann. Derartige Bewicklungsvorgänge sind in der Kabeltechnik an sich bekannt. Im zweiten Extruder E2 wird nun auf das bewickelte Grundschlauchelement GS ein Deckschlauch DS aufextrudiert, so daß der bewickelte Faden SF überdeckt wird. In der Figur ist auch angedeutet, daß der Kunststoffschlauch in an sich bekannter Weise gegen Kollabieren im noch weichen Zustand durch Einführung von Druckluft DL ins Innere des Schlauches gestützt werden kann. Diese Maßnahme ist an sich bekannt und geläufig. Als Material für den Deckschlauch DS kann beliebiges thermoplastisches Material verwendet werden, das eine geeignete Haftung zum darunter liegenden bewickelten Grundschlauchelement GS garantiert, zum Beispiel ebenfalls Polyethylen. Im Anschluß an die Extrusion des Deckschlauches DS wird nun der fertig extrudierte Schrumpfschlauch SS einer Vernetzungsvorrichtung BV, vorzugsweise einer energiereichen Bestrahlung, zugeführt. Jedoch ist auch eine chemische Vernetzung mittels Peroxyden oder Silan möglich. Durch diese Vernetzung erhält der Schrumpfschlauch SS schließlich die erforderlichen Eigenschaften bezüglich Schmelz- und Tropffestigkeit bei Schrumpftemperatur. Im übrigen wird durch die anschließende Vernetzung auch die gegenseitige Haftung der einzelnen Schichten zueinander begünstigt. Selbstverständlich ist es auch möglich, das Verfahren in einzelne Verfahrensabschnitte mit jeweils einem Teilschritt oder mehreren Teilschritten zu zerlegen. Es kann beispielsweise zweckmäßig sein, den Vernetzungsvorgang vom Extrusionsvorgang zu trennen, da beide Verfahrensabschnitte meist räumlich voneinander getrennt sind. In diesem Fall müßte dann der Schrumpfschlauch SS zunächst abgekühlt werden, um ihn lagern bzw. transportieren zu können.

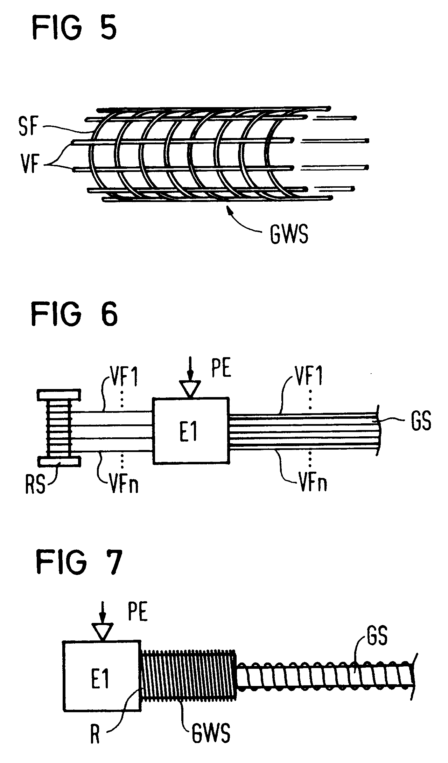

Die Figur 2 zeigt gegenüber dem vorherigen Ausführungsbeispiel ein erweitertes Verfahren. Hier werden nun zusätzlich zu dem wärmeschrumpfbaren Faden SF, der in gleicher Weise wie vorher aufgebracht wird, mehrere längsveraufende Fäden VF zur Verstärkung auf das Grundschlauchelement GS aufgebracht. Dies erfolgt zum Beispiel, wie in der Figur 2 angedeutet ist, mittels einer parallel in Längsrichtung zum extrudierten Schrumpfschlauchelement GS pendelnden Vorratsspule LS, von der das fadenförmige Verstärkungselement VF, zum Beispiel in Form thermisch stabiler Fasern wie Glasfasern, abgezogen wird. In diesem Bereich können auch mehrere solcher Vorratsspulen LS angeordnet sein. Dadurch läßt sich beispielsweise eine Art Gelege von längsverlaufenden Verstärkungselementen VF in Form von Stützfäden erstellen. In ähnlicher Weise ist bei entsprechend gewählter Steigung des wendelförmigen Aufbringens des schrumpfbaren Fadens SF im Zusammenspiel mit dem Aufbringen des Stützfadens bzw. der Stützfäden VF eine Gewebestruktur herstellbar, wie es beispielsweise in der Figur 5 in vereinfachter Form dargestellt ist. Die weiteren Verfahrensschritte schließen sich dann in bereits beschriebener Weise an.

Die Figur 3 zeigt nun einen Schrumpfschlauch SS im Querschnitt, wobei hier gezeigt ist, daß auf der Innenfläche eine Innenbeschichtung mit Schmelzkleber SK entweder durch Coextrusion mit dem Grundschlauchelement GS oder bei diskontinuierlicher Fertigung in einem weiteren Verfahrensschritt aufgebracht wird. Nach auswärts gesehen folgt dann das Grundschlauchelement GS aus einem thermoplastischen Kunststoff, vorzugsweise aus Polyethylen. Daran schließt sich ringförmig die Lage der Bewicklung mit dem schrumpfbaren Element aus einem wendelförmig aufgebrachten schrumpfbaren Faden SF und den in Längsrichtung verlaufenden Verstärkungselementen VF, die zusammen ein Gelege oder ein Gewebe bilden. Schließlich folgt hierauf der Deckschlauch DS. Im übrigen kann die Vernetzung des schrumpfbaren Fadens SF auch bereits vor dem Aufbringen auf das Grundschlauchelement erfolgen.

Die Figur 4 verdeutlicht eine Ausführungsform, bei der zumindest zwei schrumpfbare Fäden SF1 und SF2 wendelförmig auf das Grundschlauchelement GS so aufgebracht sind, daß sich Kreuzungspunkte KP ergeben. Vorteilhafterweise werden die sich kreuzenden schrumpfbaren Fäden SF1 und SF2 in den Kreuzungspunkten miteinander fixiert, zum Beispiel durch Verschweißen. Auf diese Weise wird ein "Weglaufen" der schrumpfbaren Fäden SF1 und SF2 in Längsrichtung beim Schrumpfvorgang verhindert.

In Figur 5 wird noch erläutert, daß ein bereits gefertigter schrumpfbarer Gewebeschlauch GWS aus ringförmig verlaufenden schrumpfbaren Fäden SF und aus längsverlaufenden Verstärkungselementen in Form von Stützfäden VF verwendet werden kann.

Da es sich um eine diskontinuierliche Fertigung handelt, muß der Gewebeschlauch zunächst auf einen Vorratsdorn geschoben werden, von dem er dann auf den Grundschlauch gezogen wird. Anschließend wird eine Deckschicht DS aufgebracht, durch zum Beispiel Aufwalzen, Extrudieren oder Aufschrumpfen eines zweiten Schlauches.

Bei einer diskontinuierlichen Herstellung kann auch das bereits verfestigte Grundschlauchelement GS auf einer Art Drehmaschine gedreht werden, so daß sich der von der mit Vorschub betriebenen Vorratsspule RS abgezogene schrumpfbare Faden SF aufwickelt. Anschließend wird in einem weiteren Extruder wie bereits beschrieben die Deckschicht aufgebracht, zum Beispiel auch zwischen drei Walzen, mit denen der extrudierte Deckschlauch DS auf das bewickelte Grundschlauchelement GS aufgewickelt wird. Es kann zur Beschichtung jedoch auch ein geweiteter und damit schrumpfbarer Deckschlauch aufgebracht werden.

Figur 6 zeigt als Ausschnitt, daß die Stützfäden VF1 bis VFn bereits in den Extruder E1 eingeführt werden, so daß das auslaufende Grundschlauchelement GS bereits in dieser Phase mit den längsverlaufenden Stützfäden VF versehen ist. Der weitere Verlauf folgt dann nach Figur 1.

Die Figur 7 zeigt ein weiteres Ausführungsbeispiel, bei dem nach dem Extruder E1 ein Vorratsrohr R angesetzt ist, auf welches ein Vorrat eines zusammengeschobenen "Gewebestrumpfes" GWS aufgeschoben ist. Im Fortlauf des extrudierten Grundschlauchelementes GS wird dann der Gewebestrumpf GWS kontinuierlich auf die Oberfläche des Grundschlauchelementes GS abgezogen.

Insgesamt ergeben sich bei der Fertigung nach dem erfindungsgemäßen Verfahren folgende Vorteile gegenüber dem bisherigen Stand der Technik:
- Erhöhung der mechanischen Festigkeit
- Erhöhung der Rißfestigkeit jeweils von der Kante her
- Fertigung ohne Problematik der bisherigen Aufweitverfahren
- geringe Schwankung der Wandstärken
- gleichmäßige Vernetzung
- größere Schrumpffaktoren als bisher üblich
- Herstellung von Schrumpfschläuchen mit großem Durchmesser ohne Problem herstellbar
- auch Schrumpfschläuche mit großem Durchmesser kontinuierlich herstellbar
- Erhöhung der Schrumpffaktoren ermöglicht größere Schrumpfunterschiede, so daß in vielen Fällen geschnittene Manschetten mit nachteiligen Längsverschlüssen ersetzt werden können.

## Patentansprüche

1. Verfahren zum Herstellen eines wärmeschrumpfbaren Kunststoffschlauches mit wärmeschrumpfbaren Fäden,
**dadurch gekennzeichnet**,
daß ein Grundschlauchelement (GS) aus Kunststoffmaterial extrudiert wird, daß auf das Grundschlauchelement (GS) mindestens ein schrumpfbarer Faden (SF) wendelförmig fortlaufend aufgewickelt wird, daß anschließend in einem weiteren Extruder (E2) ein Deckschlauch (DS) aus Kunststoffmaterial auf das bewickelte Grundschlauchelement (GS) aufextrudiert wird und daß im Anschluß daran eine Vernetzung vorgenommen wird.

2. Verfahren nach Anspruch 1,
**dadurch gekennzeichnet**,
daß als Material für das Grundschlauchelement (GS) ein thermoplastischer Kunststoff, vorzugsweise Polyethylen, verwendet wird.

3. Verfahren nach Anspruch 2,
**dadurch gekennzeichnet**,
daß als Material für den Deckschlauch (DS) das gleiche Material wie für das Grundschlauchelement (GS) verwendet wird.

4. Verfahren nach Anspruch 1,
**dadurch gekennzeichnet**,
daß für das Grundschlauchelement (GS) ein vom Material des Deckschlauches (DS) verschiedenes thermoplastisches Material verwendet wird.

5. Verfahren nach einem der vorhergehenden Ansprüche,
**dadurch gekennzeichnet**,
daß der wärmeschrumpfbare Faden (SF) aus Kunststoff, vorzugsweise aus Polyethylen, vor dem Aufwickeln gereckt wird, vorzugsweise mit einem Reckfaktor von 5 bis 20.

6. Verfahren nach Anspruch 5,
**dadurch gekennzeichnet**,
daß der wärmeschrumpfbare Faden (SF) vor dem Aufwickeln auf das Grundschlauchelement (GS) vernetzt wird.

7. Verfahren nach einem der vorhergehenden Ansprüche,
**dadurch gekennzeichnet**,
daß längsverlaufende, wärmestabile, verstärkende Stützfaden (VF), vorzugsweise Glasfasern, in der zylindrischen Flächenebene des schrumpfbaren Fadens (SF) aufgebracht wird.

8. Verfahren nach Anspruch 7,
**dadurch gekennzeichnet**,
daß die Stützfäden (VF) von einer in Achsrichtung (LR) des Grundschlauchelementes (GS) pendelnden Spule (LS) abgezogen werden.

9. Verfahren nach Anspruch 7 oder 8,
**dadurch gekennzeichnet**,
daß der Stützfaden (VF) im Zusammenspiel mit dem wendelförmig aufzubringenden schrumfpbaren Faden (SF) in Webform aufgebracht wird.

10. Verfahren nach einem der vorhergehenden Ansprüche,
**dadurch gekennzeichnet**,
daß die Vernetzung des gesamten Schrumpfschlauches (SS) in einer sich dem zweiten Extruder (E2) anschließenden Vernetzungsstrecke (BV) mit energiereicher Bestrahlung oder chemisch durchgeführt wird.

11. Verfahren nach einem der vorhergehenden Ansprüche,
**dadurch gekennzeichnet**,
daß mehrere schrumfpbare Fäden (SF) wendelförmig parallel verlaufend auf das Grundschlauchelement (GS) aufgewickelt werden.

12. Verfahren nach einem der Ansprüche 1 bis 10,
**dadurch gekennzeichnet**,
daß mehrere schrumpfbare Fäden (SF1, SF2) so aufgewickelt werden, daß eine gitterförmige Struktur mit Kreuzungspunkten (KP) entsteht.

13. Verfahren nach Anspruch 12,
**dadurch gekennzeichnet**,
daß die schrumpfbaren Fäden (SF1, SF2) in den Kreuzungspunkten (AP) miteinander verbunden, vorzugsweise verschweißt werden.

14. Verfahren nach einem der vorhergehenden Ansprüche,
**dadurch gekennzeichnet**,
daß die Aufwicklung des schrumpfbaren Fadens (SF) durch Rotation (RR) der Vorratsspule (RS) um das extrudierte Grundschlauchelement (GS) herum erfolgt.

15. Verfahren nach einem der Ansprüche 1 bis 13,
**dadurch gekennzeichnet**,
daß die Aufwicklung des schrumpfbaren Fadens (SF) durch Rotation des Grundschlauchelementes (GS) erfolgt, wobei die Vorratsspule (RS) mit dem schrumpfbaren Faden (SF) mit achsparallelem Vorschub geführt wird.

16. Verfahren nach einem der vorhergehenden Ansprüche,
**dadurch gekennzeichnet**,
daß die Beschichtung des mit dem schrumpfbaren Faden (SF) bewickelten Grundschlauchelementes (GS) mit dem Deckschlauch (DS) innerhalb des zweiten Extruders (E2) mit Hilfe von Walzen, vorzugsweise drei Walzen, durchgeführt wird.

17. Verfahren nach einem der vorhergehenden Ansprüche,
**dadurch gekennzeichnet**,
daß die einzelnen Verfahrensabschnitte diskontinuierlich in verschiedenen Teilschritten durchgeführt werden.

18. Verfahren nach Anspruch 17,
**dadurch gekennzeichnet**,
daß auf das in einem ersten Teilschritt gefertigte "endliche" Grundschlauchelement (GS) ein zylindrisches Gewebestück (GWS) aus mindestens einem zylindrisch umlaufenden schrumpfbaren Faden (SF) und aus achsparallel verlaufenden Stützfäden (VF) als Belege oder Gewebe aufgebracht wird, daß in einem weiteren Teilschritt der Deckschlauch (DS) aufgebracht wird und daß in einem nächsten Teilschritt die Vernetzung (WV) durchgeführt wird.

19. Verfahren nach Anspruch 7,
**dadurch gekennzeichnet**,
daß die längsverlaufenden Stützfäden (VF) im Extruder (E1) auf das Grundschlauchelement (GS) aufgebracht werden.

20. Verfahren nach einem der vorhergehenden Ansprüche,
**dadurch gekennzeichnet**,
daß die Beschichtung des mit dem schrumpfbaren Faden (SF) bewickelten Grundschlauchelementes (GS) mit einem geweiteten und aufschrumpfbaren Deckschlauch erfolgt.

21. Wärmeschrumpfbarer Kunststoffschlauch mit wärmeschrumpfbaren Fäden,
**dadurch gekennzeichnet,**
daß der Kunststoffschlauch ein inneres, aus Kunststoffmaterial, vorzugsweise aus Polyethylen, extrudiertes Grundschlauchelement (GS) aufweist, daß mindestens ein schrumpfbarer Faden (SF) darüber fortlaufend wendelförmig aufgewickelt ist und daß eine äußere, aus thermoplastischem Kunststoff extrudierte Deckschicht (DS) angeordnet ist.

22. Wärmeschrumpfbarer Kunststoffschlauch nach Anspruch 21,
**dadurch gekennzeichnet,**
daß auf der Innenfläche eine bei Schrumpftemperatur schmelzende Kleberschicht (SK) aufgebracht ist.

## Claims

1. Process for making a heat-shrinkable plastic tube having heat-shrinkable filaments, characterized in that a basic tube element (GS) of plastic material is extruded, in that at least one shrinkable filament (SF) is helically wound continuously onto the basic tube element (GS), in that subsequently a cover tube (DS) of plastic material is extruded onto the wound basic tube element (GS) in a further extruder (E2) and in that thereafter a crosslinking is performed.

2. Process according to Claim 1, characterized in that a thermoplastic material, preferably polyethylene, is used as the material for the basic tube element (GS).

3. Process according to Claim 2, characterized in that the same material as is used for the basic tube element (GS) is used as the material for the cover tube (DS).

4. Process according to Claim 1, characterized in that a thermoplastic material different from the material of the cover tube (DS) is used for the basic tube element (GS).

5. Process according to one of the preceding claims, characterized in that the heat-shrinkable filament (SF) of plastic, preferably of polyethylene, is stretched before winding, preferably with a stretching factor of 5 to 20.

6. Process according to Claim 5, characterized in that the heat-shrinkable filament (SF) is crosslinked before winding onto the basic tube element (GS).

7. Process according to one of the preceding claims, characterized in that longitudinally running, heat-stable, reinforcing supporting filaments (VF), preferably glass fibres, are applied in the cylindrical surface plane of the shrinkable filament (SF).

8. Process according to Claim 7, characterized in that the supporting filaments (VF) are drawn off a reel (LS) reciprocating in the axial direction (LR) of the basic tube element (GS).

9. Process according to Claim 7 or 8, characterized in that the supporting filament (VF) is applied in a weaving form together with the shrinkable filament (SF) to be helically applied.

10. Process according to one of the preceding claims, characterized in that the crosslinking of the complete shrink tube (SS) is carried out in a crosslinking section (BV), adjoining the second extruder (E2), by high-energy irradiation or chemically.

11. Process according to one of the preceding claims, characterized in that a plurality of shrinkable filaments (SF) are wound helically, running parallel, onto the basic tube element (GS).

12. Process according to one of Claims 1 to 10, characterized in that a plurality of shrinkable filaments (SF1, SF2) are wound on such that a lattice-like structure with intersections (KP) is produced.

13. Process according to Claim 12, characterized in that the shrinkable filaments (SF1, SF2) are bonded, preferably fused to one another at the intersections (AP).

14. Process according to one of the preceding claims, characterized in that the winding of the shrinkable filament (SF) is performed by rotation (RR) of the supply reel (RS) around the extruded basic tube element (GS).

15. Process according to one of Claims 1 to 13, characterized in that the winding of the shrinkable filament (SF) is performed by rotation of the basic tube element (GS), the supply reel (RS) with the shrinkable filament (SF) being guided with axially parallel advancement.

16. Process according to one of the preceding claims, characterized in that the covering with the cover tube (DS) of the basic tube element (GS) with the shrinkable filament (SF) wound on it is carried out within the second extruder (E2) with the aid of rollers, preferably three rollers.

17. Process according to one of the preceding claims, characterized in that the individual process stages are carried out discontinuously in various sub-steps.

18. Process according to Claim 17, characterized in that a cylindrical woven piece (GWS) comprising at least one cylindrically running-around shrinkable filament (SF) and axially parallel-running supporting filaments (VF) is applied as a covering or woven fabric to the "finite" basic tube element (GS) fabricated in a first sub-step, in that the cover tube (DS) is applied in a further sub-step and in that the crosslinking (WV) is carried out in a next sub-step.

19. Process according to Claim 7, characterized in that the longitudinally running supporting filaments (VF) are applied to the basic tube element (GS) in the extruder (E1).

20. Process according to one of the preceding claims, characterized in that the covering of the basic tube element (GS), with the shrinkable filament (SF) wound onto it, is performed with a cover tube which has been expanded and can be shrunk onto it.

21. Heat-shrinkable plastic tube with heat-shrinkable filaments, characterized in that the plastic tube has an inner extruded basic tube element (GS) of plastic material, preferably of polyethylene, in that at least one shrinkable filament (SF) is continuously wound helically thereover and in that there is arranged an outer cover layer (DS), extruded from thermoplastic material.

22. Heat-shrinkable plastic tube according to Claim 21, characterized in that an adhesive layer (SK) which melts at shrinking temperature is applied to the inner surface.

## Revendications

1. Procédé de fabrication d'un tuyau souple en matière plastique thermorétractable ayant des fils thermorétractables,
caractérisé
en ce qu'il consiste à extruder un élément de base (GS) de tuyau souple en matière plastique, à enrouler en continu en hélice sur l'élément de base (GS) de tuyau souple au moins un fil (SF) rétractable, à surextruder ensuite, dans une autre extrudeuse (E2), un tuyau souple (DS) de finition en matière plastique sur l'élément de base (GS) de tuyau souple muni de l'enroulement et à effectuer à la suite de cela une réticulation.

2. Procédé suivant la revendication 1,
caractérisé
en ce qu'il consiste à utiliser comme matière, pour l'élément de base (GS) de tuyau souple, une matière plastique thermoplastique, de préférence du polyéthylène.

3. Procédé suivant la revendication 2,
caractérisé
en ce qu'il consiste à utiliser comme matière, pour le tuyau souple (DS) de finition, la même matière que pour l'élément de base (GS) de tuyau souple.

4. Procédé suivant la revendication 1,
caractérisé
en ce qu'il consiste à utiliser pour l'élément de base (GS) de tuyau souple, une matière thermoplastique différente de celle du tuyau souple (DS) de finition.

5. Procédé suivant l'une des revendications précédentes,
caractérisé
en ce qu'il consiste à étirer, avant l'enroulement, le fil (SF) thermorétractable en matière plastique, de préférence en polyéthylène, de préférence à un facteur d'étirage de 5 à 20.

6. Procédé suivant la revendication 5 caractérisé
en ce qu'il consiste à réticuler le fil (SF) thermorétractable avant l'enroulement sur l'élément de base (GS) de tuyau souple.

7. Procédé suivant l'une quelconque des revendications précédentes
caractérisé
en ce qu'il consiste à appliquer des fils d'appui (VF) renforçants, s'étendant longitudinalement et stables à la chaleur, de préférence des fibres de verre, dans le plan de la surface cylindrique du fil (SF) rétractable.

8. Procédé suivant la revendication 7,
caractérisé
en ce qu'il consiste à tirer les fils d'appui (VF) d'une bobine (LS) oscillant dans la direction de l'axe (LR) de l'élément de base (GS) de tuyau souple.

9. Procédé suivant la revendication 7 ou 8,
caractérisé
en ce qu'il consiste à appliquer le fil d'appui (VF) sous forme de nappe en coopération avec le fil (SF) rétractable appliqué sous forme d'hélice.

10. Procédé suivant l'une des revendications précédentes,
caractérisé
en ce qu'il consiste à effectuer la réticulation de tout le tuyau souple (SS) rétractable par exposition à un rayonnement riche en énergie ou chimiquement dans une zone de réticulation (BV) faisant suite à la deuxième extrudeuse (E2).

11. Procédé suivant les revendications précédentes,
caractérisé
en ce qu'il consiste à enrouler plusieurs fils (SF) rétractables s'étendant parallèlement en hélice sur l'élément de base (GS) du tuyau souple.

12. Procédé suivant l'une des revendications 1 à 10,
caractérisé
en ce qu'il consiste à enrouler plusieurs fils (SF1, SF2) rétractables de manière à créer une structure en forme de réseau ayant des points (KP) d'intersection.

13. Procédé suivant la revendication 12,
caractérisé
en ce qu'il consiste à relier entre eux, de préférence en les soudant, les fils (SF1 à SF2) rétractables aux points (AP) d'intersection.

14. Procédé suivant l'une des revendications précédentes,
caractérisé
en ce qu'il consiste à effectuer l'enroulement du fil (SF) rétractable en faisant tourner (RR) la bobine (RS) de réserve par rapport à l'élément de base (GS) de tuyau souple qui est extrudé.

15. Procédé suivant l'une des revendications 1 à 13,
caractérisé
en ce qu'il consiste à effectuer l'enroulement du fil (SF) rétractable en faisant tourner l'élément de base (GS) de tuyau souple, la bobine (RS) de réserve ayant le fil (SF) rétractable étant guidée avec un avancement parallèlement à l'axe.

16. Procédé suivant l'une des revendications précédentes,
caractérisé
en ce qu'il consiste à effectuer le revêtement de l'élément de base (GS) de tuyau souple, sur lequel est enroulé le fil (SF) rétractable par le tuyau souple (DS) de finition dans la deuxième extrudeuse (E2) à l'aide de cylindres, de préférence à l'aide de trois cylindres.

17. Procédé suivant l'une des revendications précédentes,
caractérisé
en ce qu'il consiste à effectuer les parties du procédé de manière discontinue en des stades différents.

18. Procédé suivant la revendication 17,
caractérisé
en ce qu'il consiste à déposer sous la forme d'une couche ou d'un tissu, sur l'élément de base (GS) de tuyau souple "sans fin" fabriqué dans un premier stade, une pièce de tissu (GWS) cylindrique constituée d'au moins un fil (SF) rétractable faisant cylindriquement tout le tour et de fils d'appui (VF) s'étendant parallèlement à l'axe, à déposer dans un autre stade le tuyau souple (DS) de finition, et à effectuer, dans un stade suivant, la réticulation (WV).

19. Procédé suivant la revendication 7,
caractérisé
en ce qu'il consiste à déposer les fils d'appui (VF) s'étendant longitudinalement dans l'extrudeuse (E1) sur l'élément de base (GS) de tuyau souple.

20. Procédé suivant l'une des revendications précédentes,
caractérisé
en ce qu'il consiste à effectuer le revêtement de l'élément de base (GF) de tuyau souple sur lequel est enroulé le fil (SF) rétractable d'un tuyau souple de finition étiré et rétractable.

21. Tuyau souple en matière plastique thermorétractable ayant des fils thermorétractables
caractérisé,
en ce que le tuyau souple en matière plastique comporte un élément de base (GS) de tuyau souple extrudé intérieur en matière plastique de préférence en polyéthylène en ce qu'au moins un fil (SF) rétractable est enroulé dessus en continu hélicoïdalement et en ce qu'il est prévu une couche de finition (DS) extrudée extérieure en matière plastique thermoplastique.

22. Tuyau souple en matière plastique thermorétractable ayant des fils thermorétractables :
caractérisé
en ce que sur la face intérieure est déposée une couche de colle (SK) fondant à la température de retrait.
